# EUROPÄISCHE PATENTANMELDUNG

(11) **EP 4 635 883 A1**
(43) Veröffentlichungstag der Anmeldung: **22.10.2025**
(21) Anmeldenummer: 25171225.3
(22) Anmeldetag: 17.04.2025
(51) Int. Cl.: B65G 43/00, B65G 47/86, B65G 47/90, B67C 3/00

(54) **DETEKTION EINES BEHÄLTERBRUCHS IN EINER VORRICHTUNG ZUM BEHANDELN VON BEHÄLTERN**

(30) Priorität: 17.04.2024 DE 102024110830
(71) Anmelder: KRONES AG, 93073 Neutraubling (DE)
(72) Erfinder: Leidel, Marco, Neutraubling (DE)
(74) Vertreter: Nordmeyer, Philipp Werner

(57) **Zusammenfassung**

Vorrichtung (1) zum Behandeln von Behältern, vorzugsweise zum Befüllen von Behältern mit einem Füllprodukt in einer Getränkeabfüllanlage, und Verfahren zur Detektion einer Behälteranomalie, vorzugsweise eines Behälterbruchs oder eines Behälterverlusts, in einer solchen Vorrichtung (1). Die Vorrichtung (1) weist auf: eine elektrisch betätigbare Klammervorrichtung (50) zum Halten eines Behälters, wobei die Klammervorrichtung (50) zumindest eine elektrische Antriebseinheit (53) aufweist, die zum Betätigen der Klammervorrichtung (50), umfassend das Greifen und Freigeben des Behälters, eingerichtet ist; und eine Verarbeitungseinrichtung (100), die mit der Klammervorrichtung (50) in Kommunikation steht und eingerichtet ist, um zumindest einen elektrischen Betriebsparameter, vorzugsweise eine Stromaufnahme und/oder eine elektrische Leistung, der elektrischen Antriebseinheit (53) zu überwachen; wobei die Verarbeitungseinrichtung (100) ferner eingerichtet ist, um aus der Überwachung des Betriebsparameters ein Behältersignal zu generieren, das angibt, ob die Klammervorrichtung (50) einen Behälter hält oder nicht, und in Abhängigkeit des Behältersignals eine Behälteranomalie, vorzugsweise einen Behälterbruch oder einen Behälterverlust, zu ermitteln.

## Beschreibung

### Technisches Gebiet

Die vorliegende Erfindung betrifft eine Vorrichtung zum Behandeln von Behältern, vorzugsweise zum Befüllen von Behältern mit einem Füllprodukt in einer Getränkeabfüllanlage, sowie ein Verfahren zur Detektion einer Behälteranomalie, insbesondere eines Behälterbruchs oder eines Behälterverlusts, in einer solchen Vorrichtung.

### Stand der Technik

Bei der Abfüllung von flüssigen Füllprodukten in Behälter, beispielsweise bei der Abfüllung von Getränken in Glasflaschen, kann es gelegentlich zum Bruch eines Behälters kommen, beispielsweise wenn ein vorgeschädigter Behälter während des Befüllens mit Druck beaufschlagt wird. Eine Voraussetzung, um mit einem solchen Szenario während des regulären Betriebs umgehen zu können, ist die Erkennung von Behälterbrüchen.

Es ist bekannt, Behälterbrüche durch eine Überwachung des Betriebszustands von Füllorganen oder Verschließorganen zu detektieren, etwa über die Stellung von Hubzylindern, Füllsonden, Glockengestängen usw., wobei im Fall von Abweichungen von einem normalen Verhalten gegebenenfalls auf einen Behälterbruch geschlossen werden kann. So beschreibt die DE 10 2019 135 223 A1 eine Methode zum Erkennen der Strukturintegrität eines zu verschließenden Behälters, indem die in Längsrichtung wirkende Kraft durch Erfassen eines Steuer-/Regelstromes eines die Verschiebung des Verschließorgans in Längsrichtung bereitstellenden elektrischen Antriebs bestimmt wird.

Es ist ferner bekannt, Behälterbrüche mittels externer Sensoren zu erkennen. Hierbei kommen insbesondere optische Sensoren wie etwa Kameras in Betracht. Auch die Verwendung von Ultraschallsensoren oder Lichtschranken zur Überwachung des Behälterstroms ist bekannt. Die DE 10 2021 108 790 A1 beschreibt ein Verfahren zum Auswerten von defekten Behältnissen, das auf örtlich aufgelösten Sensordaten beruht.

Durch Verschmutzung, Wassertropfen, Fehleinstellungen und dergleichen kann es zu Fehlern bei der Detektion von Behälterbrüchen kommen. Neben der allgemeinen Erkennung von Behälterbrüchen ist es zudem nicht immer einfach, solche Defekte gezielt zu erkennen, d.h. die Position in der Anlage, an der ein Behälterbruch stattgefunden hat, exakt aufzulösen.

### Darstellung der Erfindung

Eine Aufgabe der Erfindung besteht darin, eine verbesserte Vorrichtung zum Behandeln von Behältern, vorzugsweise zum Befüllen von Behältern mit einem Füllprodukt in einer Getränkeabfüllanlage, sowie ein verbessertes Verfahren zur Detektion einer Behälteranomalie, insbesondere eines Behälterbruchs oder eines Behälterverlusts, in einer solchen Vorrichtung bereitzustellen.

Die Aufgabe wird durch eine Vorrichtung mit den Merkmalen des Anspruchs 1 sowie ein Verfahren mit den Merkmalen des nebengeordneten Verfahrensanspruchs gelöst. Vorteilhafte Weiterbildungen folgen aus den Unteransprüchen, der folgenden Darstellung der Erfindung sowie der Beschreibung bevorzugter Ausführungsbeispiele.

Die Vorrichtung gemäß der Erfindung dient zum Behandeln von Behältern, umfassend insbesondere das Befüllen der Behälter mit einem Füllprodukt. Die Vorrichtung kommt besonders bevorzugt in einer Getränkeabfüllanlage zur Anwendung, beispielsweise zur Abfüllung von Wasser (still oder karbonisiert), Bier, Saft, Softdrinks, Smoothies, Milchprodukten, Mischgetränken und dergleichen.

Die zu behandelnden Behälter können Flaschen aus Glas, PET, Dosen oder geeignete Behälter anderer Beschaffenheit sein.

Die Vorrichtung weist eine elektrisch betätigbare Klammervorrichtung zum Halten eines Behälters auf, wobei die Klammervorrichtung zumindest eine elektrische Antriebseinheit umfasst, die zum Betätigen der Klammervorrichtung, umfassend das Greifen und Freigeben des Behälters, eingerichtet ist. Zu diesem Zweck kann die Klammervorrichtung schwenkbar und/oder verschiebbar gelagerte Klammerarme aufweisen, die über eine Betätigung mittels der Antriebseinheit einen Behälter greifen beziehungsweise freigeben zu können.

Die Vorrichtung weist ferner eine Verarbeitungseinrichtung auf, die mit der Klammervorrichtung in Kommunikation steht und eingerichtet ist, um zumindest einen elektrischen Betriebsparameter, vorzugsweise eine Stromaufnahme und/oder eine elektrische Leistung, der elektrischen Antriebseinheit zu überwachen. Die Klammervorrichtung stellt auf diese Weise eine Diagnosefähigkeit bereit. Alternativ oder zusätzlich kann als Betriebsparameter ein Widerstandswert, eine Schließgeschwindigkeit der Klammervorrichtung oder eine andere geeignete Größe herangezogen werden.

Die Verarbeitungseinrichtung ist ferner eingerichtet, um aus der Überwachung des Betriebsparameters ein Behältersignal zu generieren, das angibt, ob die Klammervorrichtung einen Behälter hält oder nicht, und in Abhängigkeit des Behältersignals eine Behälteranomalie, vorzugsweise einen Behälterbruch oder einen Behälterverlust, zu ermitteln.

Die beschriebene Diagnosefunktion der Feststellung einer Behälteranomalie, wie etwa eines Behälterbruchs oder eines Behälterverlusts, kommt ohne außensitzende Sensorik aus, d.h. ohne Ultraschallsensoren, Kameras, Lichtschranken und dergleichen. Daraus folgt, dass Umgebungsbedingen und Feineinstellungen keinen Einfluss auf die Qualität des Behältersignals für die Detektion haben. Zudem ist die Reaktionszeit sehr gering. Die Behälterhandhabung durch die Klammervorrichtung und die Diagnosefunktion werden auf synergetische Weise kombiniert.

Vorzugsweise weist die Vorrichtung zumindest ein Transportkarussell auf, an dessen Außenumfang mehrere elektrisch betätigbare Klammervorrichtungen zum Halten und Transportieren je eines Behälters installiert sind, wobei die Klammervorrichtungen jeweils zumindest eine elektrische Antriebseinheit aufweisen, die zum Betätigen der entsprechenden Klammervorrichtung, umfassend das Greifen und Freigeben des Behälters, eingerichtet ist. In diesem Fall steht die Verarbeitungseinrichtung mit jeder der Klammervorrichtungen des Transportkarussells in Kommunikation und ist eingerichtet, um jeweils zumindest einen elektrischen Betriebsparameter, vorzugsweise eine Stromaufnahme und/oder eine elektrische Leistung, der entsprechenden elektrischen Antriebseinheit zu überwachen. Die Verarbeitungseinrichtung ist hierbei ferner eingerichtet, um für jede Klammervorrichtung des Transportkarussells ein Behältersignal zu generieren, das angibt, ob die entsprechende Klammervorrichtung einen Behälter hält oder nicht, und in Abhängigkeit des Behältersignals eine Behälteranomalie, vorzugsweise einen Behälterbruch oder einen Behälterverlust, zu ermitteln.

Auf diese Weise kann eine etwaige Behälteranomalie wie Behälterbruch oder Behälterverlust zielgenau einer Teilung im Transportkarussell zugeordnet werden. Die Behälterhandhabung durch das Transportkarussell und die Diagnosefunktion werden auf synergetische Weise kombiniert.

Vorzugsweise weist die Vorrichtung ferner auf: ein Behandlungskarussell, an dessen Außenumfang mehrere Behandlungsorgane zum Behandeln der Behälter installiert sind; mehrere Transportkarusselle, umfassend einen Einlaufstern, der eingerichtet ist, um die zu behandelnden Behälter an das Behandlungskarussell zu transportieren und zu übergeben, und einen Auslaufstern, der eingerichtet ist, um die behandelten Behälter vom Behandlungskarussell zu übernehmen und abzutransportieren. Die Verarbeitungseinrichtung ist in diesem Fall vorzugsweise eingerichtet, um für jede Klammervorrichtung des Einlaufsterns ein Behältersignal zu generieren, das angibt, ob die entsprechende Klammervorrichtung einen Behälter hält oder nicht, für jede Klammervorrichtung des Auslaufsterns ein Behältersignal zu generieren, das angibt, ob die entsprechende Klammervorrichtung einen Behälter hält oder nicht, und aus einer Auswertung der so generierten Behältersignale zu ermitteln, ob es bei der Behandlung im Behandlungskarussell zu einer Behälteranomalie, umfassend einen Behälterbruch oder Behälterverlust, gekommen ist.

Die Behälterdiagnose erfolgt somit unabhängig vom Behandlungskarussell, d.h. eine Abfrage von Hubzylindern, Glockengestängen, Füllsonden, Drücken usw. kann entfallen. Damit lässt sich die Detektionsqualität verbessern, indem falsche Behälterbruchmeldungen etwa durch Verschleiß oder Defekt der oben genannten Komponenten ausgeschlossen werden können. Ferner verringern sich der maschinenbauliche Aufwand und der Wartungsaufwand der Anlage.

Besonders bevorzugt ist die Verarbeitungseinrichtung eingerichtet, um im Fall einer Behälteranomalie aus einer Auswertung der generierten Behältersignale zu ermitteln, an welchem Füllorgan die Behälteranomalie aufgetreten ist.

Indem eine Behälteranomalie wie etwa ein Behälterbruch oder Behälterverlust zielgenau einer Teilung im Behandlungskarussell, d.h. einem konkreten Behandlungsorgan, zugeordnet werden kann, vereinfacht sich die Handhabung des Behälterbruchszenarios erheblich. So kann das Behandlungskarussell gezielt an die Leerstelle gefahren, geprüft und gegebenenfalls gereinigt werden. Dies kann innerhalb eines Durchgangs beziehungsweise einer Umdrehung des Behandlungskarussells erfolgen, so dass der reguläre Betrieb der Anlage nicht oder nur unwesentlich im Fall einer Behälteranomalie gestört wird.

Das Behandlungskarussell kann auch gezielt nur an dem konkreten Behandlungsorgan eine vorgegebene Reinigungsaktion ausführen, wie beispielsweise das Auslassen der Aufnahme eines zu befüllenden Behälters in dem auf den detektierten Behälterbruch oder Behälterverlust folgenden Durchgang beziehungsweise Umdrehung und Ausspülen des konkreten Behandlungsorgans mit Füllprodukt oder Reinigungsmedium sowie das Abschwallen des konkreten Behandlungsorgans mit einer externen Schwallvorrichtung. Auf diese Weise kann erreicht werden, dass in nur einem Durchgang beziehungsweise einer Umdrehung das konkrete Behandlungsorgan wieder in einen aufnahmefähigen Zustand versetzt werden kann und im dann darauffolgenden Durchgang wieder regulär eingesetzt werden kann.

Mit anderen Worten wird an genau dem Behandlungsorgan, an dem die Behälteranomalie aufgetreten ist, eine Reinigungsaktion durchgeführt, wobei alle anderen Behandlungsorgane die Behälter regulär behandeln und insbesondere mit Füllprodukt befüllen.

Durch die exakte Bestimmung des konkreten Behandlungsorgans an dem der Behälterbruch oder der Behälterverlust detektiert wird, kann dann nur an diesem einen Behandlungsorgan auch die Reinigungsaktion ausgeführt werden. Alle anderen Behandlungsorgane können weiterhin regulär zum Behandeln der Behälter verwendet werden.

Es können natürlich auch mehrere Behälteranomalien in einem Durchgang detektiert werden, so dass sich die oben genannte Beschreibung dann auf alle diese Anomalien bezieht, die dann entsprechend an mehreren Behandlungsorganen vorliegen.

Die Einbindung der Klammervorrichtungen in die Behälterdiagnose erlaubt zudem eine Anpassung des Behandlungsprozesses durch die Verarbeitungseinrichtung in Echtzeit. So können Behälter bei voller Leistung der Anlage aus dem Einlaufstern ausgeleitet werden, im Fall einer Rückmeldung eines Behälterbruchs durch den Auslaufstern. Alternativ oder zusätzlich kann das betroffene Behandlungsorgan in der nächsten Behandlungsrunde ausgelassen werden, etwa im Sinne eines Eigenschutzes der Maschine und/oder zur Sicherung der Produktqualität, wodurch das Behälterbruchszenario durch Freibleiben des betroffenen Behandlungsorgans deutlich verkürzt wird. Auf diese Weise erfolgt eine Erhöhung der Gesamtanalgeneffektivität.

Vorzugsweise sind die Behandlungsorgane des Behandlungskarussells Füllorgane zum Einfüllen eines Füllprodukts, vorzugsweise eines Getränks, in die Behälter. Die Anwendung der vorliegenden Behälterdiagnose ist für die Anwendung der Produktabfüllung, insbesondere Getränkeabfüllung, besonders nützlich, um eine hygienische und gleichzeitig effektive Befüllung der Behälter auch im Fall eines Behälterbruchs zu gewährleisten.

Die oben genannte Aufgabe wird ferner durch ein Verfahren zur Detektion einer Behälteranomalie, vorzugsweise eines Behälterbruchs oder eines Behälterverlusts, in einer Vorrichtung zum Behandeln von Behältern, vorzugsweise zum Befüllen der Behälter mit einem Füllprodukt in einer Getränkeabfüllanlage, gelöst, wobei das Verfahren aufweist: Betätigen einer Klammervorrichtung mittels einer elektrischen Antriebseinheit zum Halten eines Behälters; Überwachen eines elektrischen Betriebsparameters, vorzugsweise einer Stromaufnahme und/oder einer elektrischen Leistung, der elektrischen Antriebseinheit, vorzugsweise während des Betätigens, mittels einer Verarbeitungseinrichtung; Generieren eines Behältersignals aus der Überwachung des Betriebsparameters, das angibt, ob die Klammervorrichtung einen Behälter hält oder nicht; und Erkennen einer Behälteranomalie, vorzugsweise eines Behälterbruchs oder eines Behälterverlusts, in Abhängigkeit des Behältersignals.

Die Merkmale, technischen Wirkungen, Vorteile sowie Ausführungsbeispiele, die in Bezug auf die Vorrichtung beschrieben wurden, gelten analog für das Verfahren.

So ist aus den oben genannten Gründen vorzugsweise zumindest ein Transportkarussell vorgesehen, an dessen Außenumfang mehrere elektrisch betätigbare Klammervorrichtungen zum Halten und Transportieren je eines Behälters installiert sind, wobei die Klammervorrichtungen jeweils zumindest eine elektrische Antriebseinheit zum Betätigen der entsprechenden Klammervorrichtung, umfassend das Greifen und Freigeben des Behälters, aufweisen. Die Verarbeitungseinrichtung überwacht hierbei zumindest einen elektrischen Betriebsparameter, vorzugsweise eine Stromaufnahme und/oder eine elektrische Leistung, der elektrischen Antriebseinheit jeder Klammervorrichtung des Transportkarussells, generiert für jede Klammervorrichtung des Transportkarussells ein Behältersignal, das angibt, ob die entsprechende Klammervorrichtung einen Behälter hält oder nicht, und ermittelt in Abhängigkeit des Behältersignals eine Behälteranomalie, vorzugsweise einen Behälterbruch oder einen Behälterverlust.

Vorzugsweise sind aus den oben genannten Gründen ferner ein Behandlungskarussell, an dessen Außenumfang mehrere Behandlungsorgane zum Behandeln der Behälter installiert sind, und mehrere Transportkarusselle vorgesehen, umfassend einen Einlaufstern, der die zu behandelnden Behälter an das Behandlungskarussell transportiert und übergibt, und einen Auslaufstern, der die behandelten Behälter vom Behandlungskarussell übernimmt und abtransportiert. Die Verarbeitungseinrichtung generiert in diesem Fall für jede Klammervorrichtung des Einlaufsterns ein Behältersignal, das angibt, ob die entsprechende Klammervorrichtung einen Behälter hält oder nicht, für jede Klammervorrichtung des Auslaufsterns ein Behältersignal, das angibt, ob die entsprechende Klammervorrichtung einen Behälter hält oder nicht, und ermittelt aus einer Auswertung der so generierten Behältersignale, ob es bei der Behandlung im Behandlungskarussell zu einer Behälteranomalie, umfassend einen Behälterbruch oder Behälterverlust, gekommen ist.

Vorzugsweise ermittelt die Verarbeitungseinrichtung aus den oben genannten Gründen im Fall einer Behälteranomalie aus einer Auswertung der generierten Behältersignale, an welchem Füllorgan die Behälteranomalie aufgetreten ist.

Vorzugsweise sind die Behandlungsorgane des Behandlungskarussells aus den oben genannten Gründen Füllorgane zum Einfüllen eines Füllprodukts, vorzugsweise eines Getränks, in die Behälter, wobei die Behandlung der Behälter im Behandlungskarussell ein Befüllen der Behälter mit dem Füllprodukt umfasst.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine Draufsicht auf eine Vorrichtung zum Befüllen von Behältern mit einem Füllprodukt gemäß einem Ausführungsbeispiel;
- Figur 2: eine perspektivische Ansicht eines Transportkarussells gemäß einem Ausführungsbeispiel; und
- Figur 3: eine perspektivische Ansicht einer Klammervorrichtung gemäß einem Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

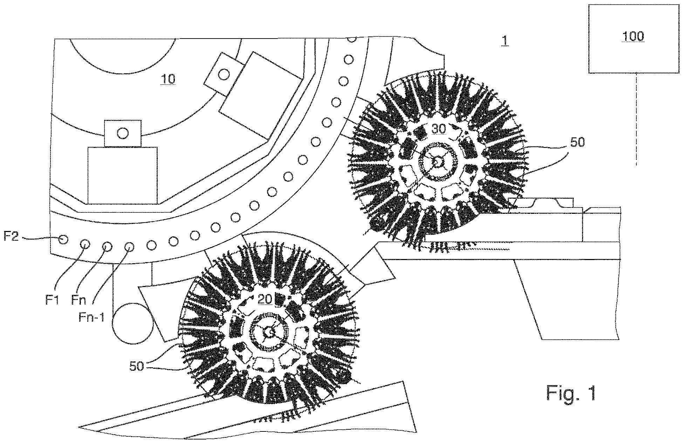

Die Figur 1 zeigt eine Draufsicht auf eine Vorrichtung 1 zum Behandeln von Behältern. Die Behälter sind in den Figuren nicht gezeigt. Die Vorrichtung 1 dient besonders bevorzugt zum Befüllen von Behältern mit einem Füllprodukt. Die Vorrichtung 1 kommt besonders bevorzugt bei der Getränkeabfüllung zur Anwendung, beispielsweise zur Abfüllung von Wasser (still oder karbonisiert), Bier, Saft, Softdrinks, Smoothies, Milchprodukten, Mischgetränken und dergleichen. Die zu befüllenden Behälter können Flaschen aus Glas, PET, Dosen oder geeignete Behälter anderer Beschaffenheit sein, die mit einem flüssigen Füllprodukt, insbesondere Getränk, befüllt werden können.

Die Vorrichtung 1 ist in Rundläuferbauweise ausgeführt, umfassend ein Behandlungskarussell 10 und einen Einlaufstern 20 sowie einen Auslaufstern 30. Das Behandlungskarussell 10 ist vorzugsweise ein Füllerkarussell.

Zunächst werden die zu behandelnden Behälter über den Einlaufstern 20, der eine Transportvorrichtung für Behälter ebenfalls in Rundläuferbauweise ist, an das Behandlungskarussell 10 übergeben.

Das Behandlungskarussell 10 ist um eine Drehachse rotierbar und weist an seinem Umfang eine Mehrzahl von Behandlungsorganen auf, die zum Behandeln der Behälter eingerichtet sind. Die Behandlungsorgane sind in der Draufsicht der Figur 1 verdeckt, deren Positionen entlang des Außenumfangs des Behandlungskarussells 10 jedoch sichtbar und seien mit F1, F2 ... Fn durchnummeriert, wobei n die Anzahl der Behandlungsorgane ist. Das Behandlungskarussell 10 weist somit n Stationen auf, an denen je ein Behälter aufgenommen und behandelt werden kann.

Die Behandlung umfasst bevorzugt ein Befüllen der Behälter mit dem Füllprodukt, wobei auch zusätzliche oder alternative Prozesse an den Behältern durchführbar sind, beispielsweise ein oder mehrere der folgenden Behandlungsprozesse: Herstellen (Streckblasen) der Behälter, Spülen der Behälter, Reinigen der Behälter, Vorspannen der Behälter, Evakuieren der Behälter, Verschließen der Behälter, Prüfen der Behälter, Etikettieren der Behälter, Bedrucken der Behälter, Verpacken der Behälter.

Die Behandlungsorgane F1, F2 ... Fn sind in gleichmäßigen Abständen entlang des gesamten Umfangs des Behandlungskarussells 10 installiert. Das Behandeln der Behälter kann bis auf ein kleines Winkelsegment zwischen den beiden Transportsternen 20, 30, das auch als "Totwinkel" bezeichnet wird, im Wesentlichen den gesamten Umfang des Behandlungskarussells 10 beanspruchen, bevor die Behälter nach dem Behandeln an den Auslaufstern 30 zum Abtransportieren der behandelten Behälter übergeben werden.

Die Ansteuerung der Vorrichtung 1 und deren Komponenten, umfassend das Behandlungskarussell 10, den Einlaufstern 20 und Auslaufstern 30, erfolgt über eine Verarbeitungseinrichtung 100, die mit den entsprechenden Komponenten in Kommunikation steht. Die Verarbeitungseinrichtung 100 ist mit den zu steuernden beziehungsweise zu regelnden und/oder auszulesenden Komponenten beziehungsweise Baugruppen signaltechnisch verbunden.

Die Kommunikation zwischen der Verarbeitungseinrichtung 100 und den zu steuernden beziehungsweise zu regelnden und/oder auszulesenden Komponenten kann drahtgebunden oder drahtlos, digital oder analog erfolgen. Die Verarbeitungseinrichtung 100 kann entsprechend Signale (Steuersignale, Daten usw.) empfangen und/oder senden, wobei sowohl ein Signaltransport in einer Richtung als auch in beiden Richtungen in diesem Zusammenhang unter den Begriff "Kommunikation" fällt. Die Verarbeitungseinrichtung 100 muss hierbei nicht unbedingt durch eine zentrale Recheneinrichtung oder elektronische Regelung realisiert sein, sondern es sind dezentrale und/oder mehrstufige Systeme, Regelungsnetzwerke, Cloud-Systeme, KI-Systeme und dergleichen umfasst. Die Verarbeitungseinrichtung 100 kann zudem integraler Bestandteil einer übergeordneten Anlagensteuerung sein oder mit einer solchen kommunizieren. Die Verarbeitungseinrichtung 100 kann auch mit Anlagensteuerungen unterer Ebenen, d.h. den entsprechenden Einrichtungen zugeordneten Steuerungen kommunizieren.

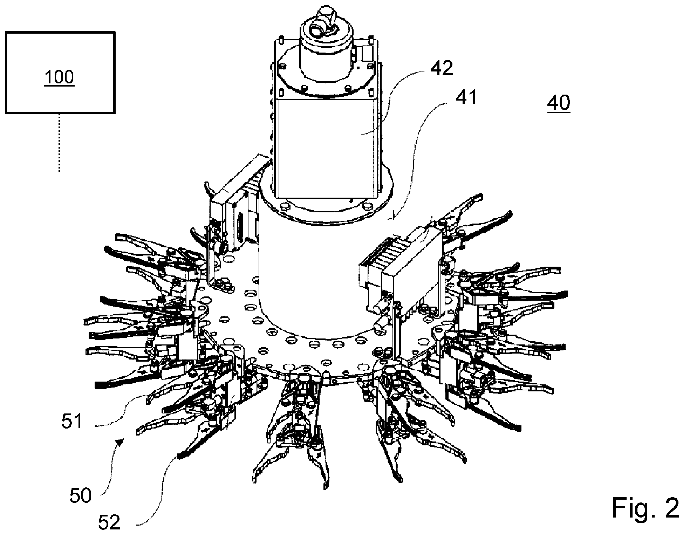

Die Figur 2 zeigt eine perspektivische Ansicht eines Transportkarussells 40, hierin auch als "Klammerstern" bezeichnet, gemäß einem Ausführungsbeispiel. Das Transportkarussell 40 fungiert hierbei als Einlaufstern 20 und/oder Auslaufstern 30.

Das Transportkarussell 40 transportiert die Behälter entlang einer kreisförmigen Trajektorie, in der Regel ohne weitergehende Behandlung der Behälter, und übergibt die Behälter an das Behandlungskarussell 10 oder transportiert die vom Behandlungskarussell 10 behandelten Behälter entsprechend ab.

Das Transportkarussell 40 ist um eine Drehachse drehbar und umfasst mehrere Klammervorrichtungen 50, die an einem Außenumfang des Transportkarussells 40 angeordnet sind, vorzugsweise in gleichmäßigen Abständen. Die Klammervorrichtungen 50 können jeweils als mehrstöckige Klammer ausgebildet sein, um den Behälter an mehreren Positionen entlang dessen Axialrichtung greifen zu können. Es ist allerdings auch möglich, dass die Klammervorrichtungen 50 als einstöckige Klammern ausgeführt sind, d.h. jeweils nur eine Klammerebene aufweisen.

Das Transportkarussell 40 ist im vorliegenden Ausführungsbeispiel als elektrischer Klammerstern ausgeführt, umfassend eine elektrische Klammerstern-Antriebseinheit 41 und einen Schleifringübertrager 42. Mittels der Klammerstern-Antriebseinheit 41 werden die Klammervorrichtungen 50 entlang einer kreisförmigen Trajektorie in Bewegung versetzt. Die Klammerstern-Antriebseinheit 41 kann je nach Konfiguration beispielsweise an einer Oberseite oder einer Unterseite des Transportkarussells 40 angeordnet sein.

Der Schleifringübertrager 42 ist mit der elektrischen Klammerstern-Antriebseinheit 41 sowie den Klammervorrichtungen 50 verbunden. Der Schleifringübertrager 42 kann beispielsweise eine elektrische Schnittstelle aufweisen, die eine elektrische Verbindung zwischen einem sich drehenden Teil des Schleifringübertragers 42 und einem feststehenden Teil des Schleifringübertragers 42 ermöglicht.

Das Transportkarussell 40 steht mit der Verarbeitungseinrichtung 100 zum Betreiben der Klammerstern-Antriebseinheit 41 und der Klammervorrichtungen 50 in Kommunikation. Alternativ oder zusätzlich kann eine lokale Verarbeitungseinrichtung intern am Transportkarussell 40 installiert sein und mit der Verarbeitungseinrichtung 100 kommunizieren.

Die Verarbeitungseinrichtung 100 überwacht einen oder mehrere elektrische Betriebsparameter der elektrischen Antriebseinheit 41 und der Klammervorrichtungen 50. Die Betriebsparameter können eine elektrische Stromaufnahme der elektrischen Klammerstern-Antriebseinheit 41 und/oder der Klammervorrichtungen 50 und/oder eine elektrische Leistung der elektrischen Klammerstern-Antriebseinheit 41 und/oder der Klammervorrichtungen 50 umfassen.

In Abhängigkeit der überwachten Betriebsparameter ermittelt die Verarbeitungseinrichtung 100 beispielsweise einen Zustand der Klammervorrichtungen 50, insbesondere deren weiter unten beschriebenen Behälterhalterungen 51, 52. Die Betriebsparameter umfassen zumindest einen Zustand, der angibt, ob die betreffende Klammervorrichtung 50 überhaupt einen Behälter hält beziehungsweise erfolgreich übernommen hat oder ob die Klammervorrichtung 50 beim Betätigen lediglich einen Leerweg ohne Übernahme des Behälters ausgeführt hat. Die Verarbeitungseinrichtung 100 kann aus den Betriebsparametern gegebenenfalls weitere Zustandsvariablen ermitteln, beispielsweise einen Verschleißzustand und/oder einen Defekt der Klammervorrichtungen 50.

Die Zustandsermittlung kann beispielsweise durch einen Vergleich des überwachten elektrischen Betriebsparameters mit mindestens einem vorgegebenen Grenzwert und/oder mindestens einem vorgegebenen Wertebereich für den elektrischen Betriebsparameter erfolgen. Der mindestens eine Grenzwert und/oder der mindestens eine Wertebereich können in der Verarbeitungseinrichtung 100 abgespeichert sein. Der mindestens eine Grenzwert und/oder der mindestens eine Wertebereich können beispielsweise empirisch, durch Tests, im Feld und/oder durch Simulation ermittelt werden und charakteristisch für bestimmte Zustände der Klammervorrichtungen 50 sein.

Die Erkennung, ob überhaupt ein Behälter von einer betreffenden Klammervorrichtung 50 aufgenommen wurde und gehalten wird oder ob die Klammervorrichtung 50 nur einen Leerweg ohne Behälterübernahme ausgeführt hat, kann beispielsweise an hierfür charakteristischen Verläufen der Stromaufnahme der betreffenden Klammervorrichtung 50 erkannt werden.

Es ist auch möglich, dass die Verarbeitungseinrichtung 100 in Abhängigkeit von den überwachten elektrischen Betriebsparametern ein Merkmal des Behälters ermittelt. Beispielsweise kann anhand der Stromaufnahme ermittelt werden, wann die Klammervorrichtung 50 in Anlage mit dem Behälter gekommen ist. Daraus lässt sich beispielsweise eine Abmessung, etwa ein Behälterdurchmesser oder eine Behälterbreite, des Behälters ableiten. Ebenso kann anhand der Stromaufnahme zum Halten mittels der Klammervorrichtung 50 auf ein Gewicht beziehungsweise eine Gewichtskraft des Behälters geschlossen werden und somit beispielsweise, ob der Behälter korrekt befüllt wurde oder leer ist.

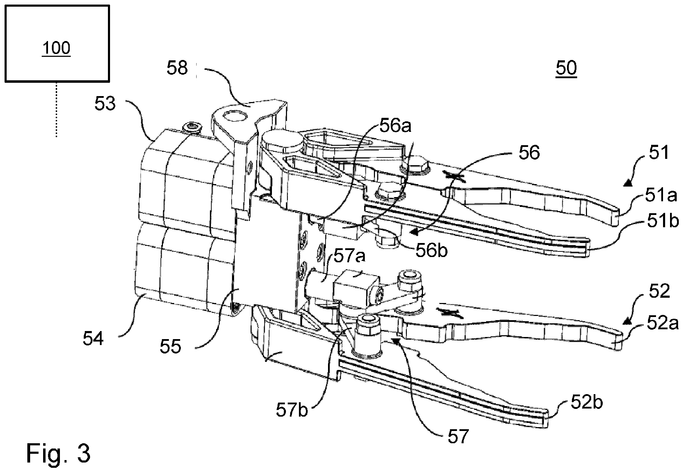

Die Figur 3 zeigt eine perspektivische Ansicht einer Klammervorrichtung 50 zum Halten und Transportieren der Behälter.

Die Klammervorrichtung 50 weist die oben genannte Behälterhalterung 51 zum Halten des Behälters auf. Die Klammervorrichtung 50 weist ferner eine elektrische Antriebseinheit 53 zur Betätigung der Behälterhalterung 51 auf. Optional kann die Klammervorrichtung 50 die oben genannte weitere Behälterhalterung 52 mit einer zugehörigen weiteren elektrischen Antriebseinheit 54 zur Betätigung der weiteren Behälterhalterung 52 aufweisen.

Die Behälterhalterungen 51, 52 sind jeweils als Klammerpaare ausgeführt. Es ist allerdings möglich, dass die Behälterhalterungen 51, 52 eine davon abweichende Konstruktion aufweisen, solange sie den Behälter mittels Betätigung durch die elektrischen Antriebseinheiten 53, 54 halten und/oder freigeben können.

Die elektrische Antriebseinheit 51 und gegebenenfalls 52 kann beispielsweise als elektrische, elektromagnetische, elektromotorische oder piezoelektrische (z. B. Linear-) Antriebseinheit ausgeführt sein. Es ist möglich, dass beispielsweise eine Haltekraft, ein Öffnungszeitpunkt, ein Schließzeitpunkt und/oder ein Verstellweg der Behälterhalterungen 51, 52 mittels der elektrischen Antriebseinheiten 53, 54 variabel verstellbar sind.

Die Behälterhalterung 51 kann zwei Klammerarme 51a, 51b aufweisen. Analog kann die weitere Behälterhalterung 52 zwei weitere Klammerarme 52a, 52b aufweisen. Vorzugsweise ist die weitere Behälterhalterung 52 im Wesentlichen baugleich und/oder funktionsgleich zur Behälterhalterung 51 ausgeführt. Bevorzugt sind die Behälterhalterung 51 und die weitere Behälterhalterung 52 im Wesentlichen spiegelsymmetrisch bezüglich einer Mittellängsebene der Klammervorrichtung 50 beziehungsweise bezüglich einer Horizontalebene (im montierten Zustand) ausgebildet. Die Mittellängsebene teilt die Klammervorrichtung 50 auf halber Höhe und kann beispielsweise parallel zu Längsachsen oder Ausrichtungsebenen der Behälterhalterungen 51, 52 verlaufen.

Die Klammerarme 51a, 51b sowie 52a, 52b sind schwenkbar und/oder verschiebbar gelagert, um einen Behälter entsprechend greifen beziehungsweise freigeben zu können. Die beiden Behälterhalterungen 51, 52 sind vorzugsweise unabhängig beziehungsweise entkoppelt voneinander bewegbar, insbesondere schwenkbar und/oder verschiebbar.

Die Behälterhalterungen 51, 52 sind an entgegengesetzten Seiten eines gemeinsamen Trägers 55 gelagert. Es ist möglich, dass die elektrische Antriebseinheit 53 und gegebenenfalls 54 direkt mit der Behälterhalterung 51 und gegebenenfalls 52 verbunden ist beziehungsweise in Wirkverbindung steht. Alternativ kann die elektrische Antriebseinheit 53 und gegebenenfalls 54 beispielsweise mittels einer Verbindungseinrichtung 56 und gegebenenfalls einer weiteren Verbindungseinrichtung 57 mit der Behälterhalterung 51 und gegebenenfalls 52 verbunden sein beziehungsweise in Wirkverbindung stehen. Die Verbindungseinrichtungen 56, 57 können die elektrischen Antriebseinheiten 53, 54 antreibend mit den Behälterhalterungen 51, 52 verbinden.

Die Verbindungseinrichtungen 56, 57 werden vom Träger 55 getragen. Die Verbindungseinrichtungen 56, 57 können sich zumindest teilweise durch den Träger 55 erstrecken, vorzugsweise in einem Durchgangsloch, das sich von einer Rückseite beziehungsweise einer dem Behälter abgewandten Seite des Trägers 55 zu einer Vorderseite beziehungsweise einer dem Behälter zugewandten Seite des Trägers 55 erstreckt.

Die Verbindungseinrichtung 56 kann in einem Abschnitt zwischen den freien Enden und der (z. B. Schwenk-) Lagerung der Klammerarme 51a, 51b mit den Klammerarmen 51a, 52a verbunden sein, vorzugsweise in Mittelabschnitten der Klammerarme 51a, 51b bezüglich der jeweiligen Längsachse. Dies gilt analog für die etwaige weitere Verbindungseinrichtung 57.

Die Verbindungseinrichtung 56 umfasst vorzugsweise ein Übertragungselement 56a und ein Kniegelenk 56b. Die weitere Verbindungseinrichtung 57 umfasst analog vorzugsweise ein weiteres Übertragungselement 57a und ein weiteres Kniegelenk 57b. Die Kniegelenke 56b, 57b sind mit den jeweiligen Übertragungselementen 56a, 56b sowie den jeweiligen Klammerarmen 51a, 51b, 52a, 52b verbunden, so dass eine Schubbewegung der Übertragungselemente 56a, 57a, bewirkt durch die Antriebseinheiten 53, 54, in eine Schwenk- beziehungsweise Spreizbewegung der Klammerarme 51a, 51b, 52a, 52b umgewandelt wird.

Bevorzugt weisen die Behälterhalterungen 51, 52, die elektrischen Antriebseinheiten 53, 54 und die Verbindungseinrichtungen 56, 57 keine elastischen Federelemente auf. Es ist allerdings prinzipiell möglich, dass ein oder mehrere elastische Federelemente und/oder Magnete vorgesehen sind, um die Behälterhalterungen 51, 52 in Richtung einer Öffnungsstellung oder einer Schließstellung vorzuspannen.

Die Klammervorrichtung 50 weist ferner eine Befestigungseinrichtung 58 auf, die zur Befestigung der Klammervorrichtung 50 am Transportkarussell 40 dient, vorzugsweise mittels einer Schraubverbindung.

Mithilfe der elektrischen Klammervorrichtungen 50 ist eine Erkennung beziehungsweise Diagnose, ob ein Behälter gehalten wird oder nicht, möglich, indem die Verarbeitungseinrichtung 100 einen entsprechenden Betriebsparameter überwacht und daraus ein Signal, hierin als "Behältersignal" bezeichnet, generiert, das den Zustand der Klammervorrichtung diesbezüglich kennzeichnet.

Durch eine solche Diagnosefähigkeit jeder einzelnen Teilung auf dem Transportstern 40 kann das Behältersignal an den Antriebseinheiten 53, 54 jeder Klammervorrichtung 50 abgefragt werden, beispielsweise über die Stromaufnahme und/oder Spannungsaufnahme. Alternativ oder zusätzlich kann das Behältersignal aus einem Widerstandswert, Schließgeschwindigkeit der Klammervorrichtung 50 oder einer anderen geeigneten Größe, die geeignet ist, um zu erkennen, ob die Klammervorrichtung 50 einen Behälter gegriffen hat oder nicht, gewonnen beziehungsweise generiert werden. Somit kann festgestellt werden, ob ein Behälter von einer betreffenden Klammervorrichtung 50 gegriffen und weitergegeben wurde.

Sowohl der Einlaufstern 20 als auch der Auslaufstern 30 der Vorrichtung 1 gemäß Figur 1 sei durch je einen Transportstern 40 mit einer solchen Diagnosefunktion ausgebildet. Der Einlaufstern 20 detektiert nun, ob ein Behälter gegriffen und an das Behandlungskarussell 10 übergeben wurde. Jede Teilung beziehungsweise Klammervorrichtung 50 im Einlaufstern 20 erfüllt somit den Effekt eines Sensors, der meldet, ob ein Behälter erkannt wurde oder nicht. Kommt es während der Behandlung durch das Behandlungskarussell 10 zu einem Behälterbruch oder einem anderweitigen Behälterverlust, so kommt am Auslaufstern 30 an der entsprechenden Übergabeposition kein Behälter an. Der Auslaufstern 30 erkennt nun analog über die Diagnosefähigkeit der elektrischen Klammerteilungen, ob ein Behälter vom Behandlungskarussell 10 an den Auslaufstern 30 übergeben wurde. Durch das Behältersignal, das die betreffende elektrische Klammervorrichtung 50 am Auslaufstern 30 ausgibt, kann durch die Verarbeitungseinrichtung 100 bestimmt werden, a) ob ein Behälterbruch (Behälterverlust usw.) im Behandlungskarussell 10 stattgefunden hat und b) an welcher Position, d.h. an welchem Behandlungsorgan F1, F2 ... Fn, ein solcher Behälterbruch (Behälterverlust usw.) stattgefunden hat.

Die Erkennung eines Behälterbruchs beziehungsweise Behälterverlusts erfolgt beispielsweise konkret durch einen Vergleich des Behältersignals einer Klammervorrichtung 50 des Einlaufsterns 20 mit dem Behältersignal der korrespondierenden Klammervorrichtung 50 des Auslaufsterns 30. So kann etwa das Behältersignal aus einem Schieberegister herangezogen und beurteilt werden, ob der Einlaufstern 20 einen Behälter an das Behandlungskarussell 10 übergeben hat oder nicht. Bei Eingabe eines Behälters in das Behandlungskarussell 10 muss ein Behälter am Auslaufstern 30 an der entsprechenden Position beziehungsweise Teilung ankommen, andernfalls ist mit dem Behälter im Behandlungskarussell 10 etwas passiert, insbesondere ein Behälterbruch oder Behälterverlust. Der Auslaufstern 30 löst auf diese Weise ein etwaiges Behälterbruchszenario aus.

Indem ein Behälterbruch beziehungsweise Behälterverlust zielgenau einer Teilung im Behandlungskarussell 10, d.h. einem konkreten Behandlungsorgan F1, F2 ... Fn, zugeordnet werden kann, vereinfacht sich die Handhabung des Behälterbruchszenarios erheblich. So kann das Behandlungskarussell 10 gezielt an die Leerstelle gefahren und gereinigt werden. Dies kann innerhalb eines Durchgangs beziehungsweise einer Umdrehung des Behandlungskarussells 10 erfolgen, so dass der reguläre Betrieb der Anlage nicht oder nur unwesentlich im Fall eines solchen Szenarios gestört wird.

Das Behandlungskarussell 10 kann auch gezielt nur an dem konkreten Behandlungsorgan F1, F2, ... Fn eine vorgegebene Reinigungsaktion ausführen, wie beispielsweise das Auslassen der Aufnahme eines zu befüllenden Behälters in dem auf den detektierten Behälterbruch oder Behälterverlust folgenden Durchgang beziehungsweise Umdrehung und Ausspülen des konkreten Behandlungsorgans F1, F2, ... Fn mit Füllprodukt oder Reinigungsmedium sowie Abschwallen des konkreten Behandlungsorgans F1, F2, ... Fn mit einer externen Schwallvorrichtung. Auf diese Weise kann erreicht werden, dass in nur einem Durchgang beziehungsweise einer Umdrehung das konkrete Behandlungsorgan F1, F2, ... Fn wieder in einen aufnahmefähigen Zustand versetzt werden kann und im dann darauffolgenden Durchgang wieder regulär eingesetzt werden kann.

Durch die exakte Bestimmung des konkreten Behandlungsorgans F1, F2, ... Fn, an dem der Behälterbruch oder der Behälterverlust detektiert wird, kann dann nur an diesem einen Behandlungsorgan auch die Reinigungsaktion ausgeführt werden. Alle anderen Behandlungsorgane können weiterhin regulär zum Behandeln der Behälter verwendet werden.

Die hierin beschriebene Diagnosefunktion der Feststellung und Lokalisierung eines Behälterbruchs beziehungsweise Behälterverlusts kommt ohne außensitzende Sensorik aus, d.h. ohne Ultraschallsensoren, Kameras, Lichtschranken und dergleichen. Daraus folgt, dass Umgebungsbedingen und Feineinstellungen keinen Einfluss auf die Qualität des Behältersignals zur Behälterbruchdetektion haben. Zudem ist die Reaktionszeit minimal, insbesondere besser als bei alternativen Sensorvarianten.

Für die Diagnosefunktion werden die elektrischen Klammervorrichtungen 50 im Einlaufstern 20 und Auslaufstern 30 in das Behälterbruchszenario eingebunden. In anderen Worten, die Behälterhandhabung und Diagnose werden auf synergetische Weise kombiniert.

Die Einbindung der Klammervorrichtungen 50 in die Behälterbruchdiagnose erlaubt zudem eine Anpassung des Behandlungsprozesses durch die Verarbeitungseinrichtung 100 in Echtzeit. So können Behälter bei voller Leistung der Anlage aus dem Einlaufstern 20 ausgeleitet werden, im Fall einer Rückmeldung eines Behälterbruchs durch den Auslaufstern 30. Alternativ oder zusätzlich kann das betroffene Behandlungsorgan F1, F2 ... Fn in der nächsten Behandlungsrunde ausgelassen werden, etwa im Sinne eines Eigenschutzes der Maschine und/oder zur Sicherung der Produktqualität, wodurch das Behälterbruchszenario durch Freibleiben des betroffenen Behandlungsorgans F1, F2 ... Fn deutlich verkürzt wird. Auf diese Weise erfolgt eine Erhöhung der Gesamtanlageneffektivität.

Mit anderen Worten wird an genau dem Behandlungsorgan F1, F2, ... Fn, an dem die Behälteranomalie aufgetreten ist, eine Reinigungsaktion durchgeführt, wobei alle anderen Behandlungsorgane F1, F2, ... Fn die Behälter regulär behandeln und insbesondere mit Füllprodukt befüllen.

Die Behälterdiagnostik erfolgt unabhängig vom Behandlungskarussell 10, d.h. eine Abfragung von Hubzylindern, Glockengestängen, Füllsonden, Drücken usw. kann entfallen. Damit lässt sich die Detektionsqualität verbessern, indem falsche Behälterbruchmeldungen etwa durch Verschleiß oder Defekt der oben genannten Komponenten ausgeschlossen werden können. Ferner verringern sich der maschinenbauliche Aufwand und der Wartungsaufwand.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Behandeln von Behältern
- 10: Behandlungskarussell
- 20: Einlaufstern
- 30: Auslaufstern
- 40: Transportkarussell
- 41: Klammerstern-Antriebseinheit
- 42: Schleifringübertrager
- 50: Klammervorrichtung
- 51: Behälterhalterung
- 51a: Klammerarm
- 51b: Klammerarm
- 52: Weitere Behälterhalterung
- 52a: Weiterer Klammerarm
- 52b: Weiterer Klammerarm
- 53: Antriebseinheit
- 54: Weitere Antriebseinheit
- 55: Träger
- 56: Verbindungseinrichtung
- 56a: Übertragungselement
- 56b: Kniegelenk
- 57: Weitere Verbindungseinrichtung
- 57a: Weiteres Übertragungselement
- 57b: Weiteres Kniegelenk
- 58: Befestigungseinrichtung
- 100: Verarbeitungseinrichtung

- F1 ... Fn: Position von Behandlungsorganen

## Patentansprüche

1. Vorrichtung (1) zum Behandeln von Behältern, vorzugsweise zum Befüllen von Behältern mit einem Füllprodukt in einer Getränkeabfüllanlage, wobei die Vorrichtung (1) aufweist:
eine elektrisch betätigbare Klammervorrichtung (50) zum Halten eines Behälters, wobei die Klammervorrichtung (50) zumindest eine elektrische Antriebseinheit (53) aufweist, die zum Betätigen der Klammervorrichtung (50), umfassend das Greifen und Freigeben des Behälters, eingerichtet ist; und
eine Verarbeitungseinrichtung (100), die mit der Klammervorrichtung (50) in Kommunikation steht und eingerichtet ist, um zumindest einen elektrischen Betriebsparameter, vorzugsweise eine Stromaufnahme und/oder eine elektrische Leistung, der elektrischen Antriebseinheit (53) zu überwachen; wobei
die Verarbeitungseinrichtung (100) ferner eingerichtet ist, um aus der Überwachung des Betriebsparameters ein Behältersignal zu generieren, das angibt, ob die Klammervorrichtung (50) einen Behälter hält oder nicht, und in Abhängigkeit des Behältersignals eine Behälteranomalie, vorzugsweise einen Behälterbruch oder einen Behälterverlust, zu ermitteln.

2. Vorrichtung (1) nach Anspruch 1, **dadurch gekennzeichnet, dass** die Vorrichtung (1) zumindest ein Transportkarussell (40) aufweist, an dessen Außenumfang mehrere elektrisch betätigbare Klammervorrichtungen (50) zum Halten und Transportieren je eines Behälters installiert sind, wobei die Klammervorrichtungen (50) jeweils zumindest eine elektrische Antriebseinheit (53) aufweisen, die zum Betätigen der entsprechenden Klammervorrichtung (50), umfassend das Greifen und Freigeben des Behälters, eingerichtet ist; wobei
die Verarbeitungseinrichtung (100) mit jeder der Klammervorrichtungen (50) des Transportkarussells (40) in Kommunikation steht und eingerichtet ist, um jeweils zumindest einen elektrischen Betriebsparameter, vorzugsweise eine Stromaufnahme und/oder eine elektrische Leistung, der entsprechenden elektrischen Antriebseinheit (53) zu überwachen; wobei
die Verarbeitungseinrichtung (100) ferner eingerichtet ist, um für jede Klammervorrichtung (50) des Transportkarussells (40) ein Behältersignal zu generieren, das angibt, ob die entsprechende Klammervorrichtung (50) einen Behälter hält oder nicht, und in Abhängigkeit des Behältersignals eine Behälteranomalie, vorzugsweise einen Behälterbruch oder einen Behälterverlust, zu ermitteln.

3. Vorrichtung (1) nach Anspruch 2, **dadurch gekennzeichnet, dass** die Vorrichtung (1) ferner aufweist:
ein Behandlungskarussell (10), an dessen Außenumfang mehrere Behandlungsorgane (F1, F2 ... Fn) zum Behandeln der Behälter installiert sind;
mehrere Transportkarusselle (40), umfassend einen Einlaufstern (20), der eingerichtet ist, um die zu behandelnden Behälter an das Behandlungskarussell (10) zu transportieren und zu übergeben, und einen Auslaufstern (30), der eingerichtet ist, um die behandelten Behälter vom Behandlungskarussell (10) zu übernehmen und abzutransportieren; wobei
die Verarbeitungseinrichtung (100) eingerichtet ist, um
für jede Klammervorrichtung (50) des Einlaufsterns (20) ein Behältersignal zu generieren, das angibt, ob die entsprechende Klammervorrichtung (50) einen Behälter hält oder nicht,
für jede Klammervorrichtung (50) des Auslaufsterns (30) ein Behältersignal zu generieren, das angibt, ob die entsprechende Klammervorrichtung (50) einen Behälter hält oder nicht, und
aus einer Auswertung der so generierten Behältersignale zu ermitteln, ob es bei der Behandlung im Behandlungskarussell (10) zu einer Behälteranomalie, umfassend einen Behälterbruch oder Behälterverlust, gekommen ist.

4. Vorrichtung (1) nach Anspruch 3, **dadurch gekennzeichnet, dass** die Verarbeitungseinrichtung (100) eingerichtet ist, um im Fall einer Behälteranomalie aus einer Auswertung der generierten Behältersignale zu ermitteln, an welchem Behandlungsorgan (F1, F2 ... Fn) die Behälteranomalie aufgetreten ist.

5. Vorrichtung (1) nach Anspruch 3 oder 4, **dadurch gekennzeichnet, dass** die Behandlungsorgane (F1, F2 ... Fn) des Behandlungskarussells (10) Füllorgane zum Einfüllen eines Füllprodukts, vorzugsweise eines Getränks, in die Behälter sind.

6. Vorrichtung (1) nach Anspruch 4 oder 5, **dadurch gekennzeichnet, dass** die Verarbeitungseinrichtung (100) eingerichtet ist, eine Reinigungsaktion an genau dem Behandlungsorgan (F1, F2, ...Fn) auszuführen, an dem die Behälteranomalie aufgetreten ist, wobei alle anderen Behandlungsorgane (F1, F2, ... Fn) die Behälter regulär behandeln.

7. Verfahren zur Detektion einer Behälteranomalie, vorzugsweise eines Behälterbruchs oder eines Behälterverlusts, in einer Vorrichtung (1) zum Behandeln von Behältern, vorzugsweise zum Befüllen der Behälter mit einem Füllprodukt in einer Getränkeabfüllanlage, wobei das Verfahren aufweist:
Betätigen einer Klammervorrichtung (50) mittels einer elektrischen Antriebseinheit (53) zum Halten eines Behälters;
Überwachen eines elektrischen Betriebsparameters, vorzugsweise einer Stromaufnahme und/oder einer elektrischen Leistung, der elektrischen Antriebseinheit (53), vorzugsweise während des Betätigens, mittels einer Verarbeitungseinrichtung (100);
Generieren eines Behältersignals aus der Überwachung des Betriebsparameters, das angibt, ob die Klammervorrichtung (50) einen Behälter hält oder nicht; und
Erkennen einer Behälteranomalie, vorzugsweise eines Behälterbruchs oder eines Behälterverlusts, in Abhängigkeit des Behältersignals.

8. Verfahren nach Anspruch 7, **dadurch gekennzeichnet, dass** zumindest ein Transportkarussell (40) vorgesehen ist, an dessen Außenumfang mehrere elektrisch betätigbare Klammervorrichtungen (50) zum Halten und Transportieren je eines Behälters installiert sind, wobei die Klammervorrichtungen (50) jeweils zumindest eine elektrische Antriebseinheit (53) zum Betätigen der entsprechenden Klammervorrichtung (50), umfassend das Greifen und Freigeben des Behälters, aufweisen;
die Verarbeitungseinrichtung (100) zumindest einen elektrischen Betriebsparameter, vorzugsweise eine Stromaufnahme und/oder eine elektrische Leistung, der elektrischen Antriebseinheit (53) jeder Klammervorrichtung (50) des Transportkarussells (40) überwacht; und
die Verarbeitungseinrichtung (100) für jede Klammervorrichtung (50) des Transportkarussells (40) ein Behältersignal generiert, das angibt, ob die entsprechende Klammervorrichtung (50) einen Behälter hält oder nicht, und in Abhängigkeit des Behältersignals eine Behälteranomalie, vorzugsweise einen Behälterbruch oder einen Behälterverlust, ermittelt.

9. Verfahren nach Anspruch 8, **dadurch gekennzeichnet, dass** ferner ein Behandlungskarussell (10), an dessen Außenumfang mehrere Behandlungsorgane (F1, F2 ... Fn) zum Behandeln der Behälter installiert sind, und mehrere Transportkarusselle (40) vorgesehen sind, umfassend einen Einlaufstern (20), der die zu behandelnden Behälter an das Behandlungskarussell (10) transportiert und übergibt, und einen Auslaufstern (30), der die behandelten Behälter vom Behandlungskarussell (10) übernimmt und abtransportiert; wobei
die Verarbeitungseinrichtung (100) für jede Klammervorrichtung (50) des Einlaufsterns (20) ein Behältersignal generiert, das angibt, ob die entsprechende Klammervorrichtung (50) einen Behälter hält oder nicht, für jede Klammervorrichtung (50) des Auslaufsterns (30) ein Behältersignal generiert, das angibt, ob die entsprechende Klammervorrichtung (50) einen Behälter hält oder nicht, und aus einer Auswertung der so generierten Behältersignale ermittelt, ob es bei der Behandlung im Behandlungskarussell (10) zu einer Behälteranomalie, umfassend einen Behälterbruch oder Behälterverlust, gekommen ist.

10. Verfahren nach Anspruch 9, **dadurch gekennzeichnet, dass** die Verarbeitungseinrichtung (100) im Fall einer Behälteranomalie aus einer Auswertung der generierten Behältersignale ermittelt, an welchem Füllorgan (F1, F2 ... Fn) die Behälteranomalie aufgetreten ist.

11. Verfahren nach Anspruch 9 oder 10, **dadurch gekennzeichnet, dass** die Behandlungsorgane (F1, F2 ... Fn) des Behandlungskarussells (10) Füllorgane zum Einfüllen eines Füllprodukts, vorzugsweise eines Getränks, in die Behälter sind und die Behandlung der Behälter im Behandlungskarussell (10) ein Befüllen der Behälter mit dem Füllprodukt umfasst.

12. Verfahren nach Anspruch 10 oder 11, **dadurch gekennzeichnet, dass** an genau dem Behandlungsorgan (F1, F2, ... Fn), an dem die Behälteranomalie aufgetreten ist, eine Reinigungsaktion durchgeführt wird, wobei alle anderen Behandlungsorgane (F1, F2, ... Fn) die Behälter regulär behandeln.
